# EUROPEAN PATENT SPECIFICATION

(11) **EP 1 219 168 B1**
(45) Date of publication and mention of the grant of the patent: **25.02.2004**
(21) Application number: 01204864.1
(22) Date of filing: 12.12.2001
(51) Int. Cl.: A01K 1/00, B29D 24/00, E04C 2/34, E04C 2/36, E04B 2/74

(54) **Separation panel for a space for keeping animals and method for manufacturing such separation panel**
Trennwand für einen Tierzuchtraum und Verfahren zur Herstellung einer solcher Trennwand
Paroi de séparation pour stalle d'animaux et procédé de fabrication d'une telle paroi

(30) Priority: 22.12.2000 BE 200000808
(43) Date of publication of application: 03.07.2002
(73) Proprietor: Paneltim N.V., 8920 Langemark (BE)
(72) Inventor: Deltour, Ludo, 8920 Langemark (BE)
(74) Representative: Donné, Eddy

(56) References cited:
- DE-A- 3 838 641

## Description

The present invention relates to a separation panel for a space for keeping animals.

Such separation panels are used, amongst others, for forming partitions in barns for animals, more particularly in the intensive livestock husbandry, such as, for example, in pig-breeding farms, where the panels are used for subdividing litter stations and piglet rearing stations into separate stalls.

In the intensive livestock husbandry, the barns must be thoroughly cleaned on a very regular basis, amongst others, in order to prevent the distribution of bacteria and disease-germs as far as possible.

Amongst others, after a group of animals has been removed from a barn and before another group of animals takes their place, the barn must be cleaned particularly thorough and be disinfected in order to prevent the possible transfer of diseases from the animals of the first group to the animals of the new group.

Therefore, it is of utmost importance that the space for keeping the animals and, thus, also the applied separation panels can be cleaned very thoroughly. Moreover, it must be possible to have the cleaning take place in a fast and efficient manner, for example, by means of water under high pressure.

The thickness and the weight of these separation panels may not become too high, as the panels frequently have to be moved around manually.

There are separation panels, manufactured of laminated fibreboard. In the long run, however, such fibreboard plates are not resistant to the humid surroundings and loose their stability and hygienic features due to swelling.

Also, steel-bordered and reinforced massive thin-walled plates are known, consisting of thermoplastic or thermo-hardening synthetic material. These plates, however, require a steel reinforcement, as a result of which they are heavy and less hygienic.

Sometimes, separation panels are formed of extruded, relatively narrow and long rectangular closed boards of synthetic material, such as PVC, HDPE or PP, which are attached in several layers one above the other and adjacent to each other, until the desired height is obtained.

A disadvantage of such composed separation panels is that the inner ribs of the boards obtained by extrusion extend over the entire horizontal length and that, if they have become soiled by cleaning water, urine etc., it is impossible to clean them thoroughly. Another disadvantage is that the joints between the mutually attached boards are difficult to clean.

Due to inner soiling, these boards are difficult to recycle at the end of their service life.

DE-A-3.838.641 discloses such extruded panel, the open ends of which are closed by a flexible foil, in order to avoid inner soiling. Such foil can easily be ripped apart of perforated, so that soil can enter inside the panel. Due to the necessity to glue foils at the ends, the manufacturing of the panel is relatively complicated and expensive.

For the purpose of livestock husbandry, technically it is very important that the separation panels, on one hand, show a sufficient rigidity for resisting the dynamic load of the animals and, on the other hand, are completely closed off at their circumference, such that they cannot harbour any bacteria or disease-germs in hidden places.

From EP-A-0.872.177, plastic sandwich panels are known which are closed at all edges and which have an inner structure consisting of partitions in horizontal as well as vertical directions. A similar plastic sandwich panel, but with only vertical partitions, is disclosed in DE-A-4.267.912.

In both cases the sandwich panels are manufactured from two halves which are welded to each other, as a result of which their manufacture is relatively complicated and, also due to the large amount of synthetic material, is expensive.

Due to their thickness and relatively large weight, such sandwich panels are not applicable as separation panels, as a frequent manipulation thereof is difficult.

This invention aims at a separation panel which does not have the aforementioned disadvantages and which is relatively easy to manufacture at relatively low costs, but which can nevertheless be placed without an additional external reinforcement, with a minimum of fixation parts in the corners, and which, due to a relatively low weight, can easily be handled manually, however, still has a sufficient mechanical stability.

According to this invention, this aim is achieved in separation panel for a space for keeping animals, which separation panel is an oblong, hollow panel which is closed on all sides and consists of synthetic material, comprises two parallel longitudinal side walls and between them two pairs of mutually parallel edges, and at the inside partitions, which are directed parallel to each other and perpendicular to two parallel edges, and which is characterised in that one of the edges is a separate strip which is provided between the side walls and that the partitions are directed perpendicular in respect to this edge.

This panel is easy to manufacture by injection moulding except of the strip. This strip can be made by extrusion.

Although the panel can be made with a minimum of synthetic material, obtaining the required high rigidity and resistance against shocks does not pose a single problem. Due to the inner hollows, formed by parallel partitions, the required basic material can be kept very limited, and separation panels can be obtained with a relatively low weight in relation to their thickness.

The fact that the separation panel is closed at all edges, provides for a minimum deposition of dirt on these panels, whereas an optimum accessibility and possibility to clean of these panels is obtained, as no additional reinforcement by steel profiles is necessary and only a minimum of fixation pieces in the corners is required.

The panel can be cleaned very thoroughly, easily and fast and, moreover, is very resistant against the chemical products, mildews, bacteria and disinfectants present in the barns. Corrosion or decomposition of the separation panel is totally excluded.

Preferably, the strip is snapped on between the side walls.

As the strip is fastened very quickly to the rest of the panel, the manufacturing is quick. The snapped strip permits to change the strip, for instance for a strip with different shape, if required. If insulating material is provided in the separation panel, this material, after the removal of said strip, can be removed, such that the separation panel still can be recycled.

The strip may be an edge directed in longitudinal direction, the partitions being thus directed perpendicular to the longitudinal direction of the separation panel.

Preferably, the inner partitions are provided at regular distances from each other and, therefore, modularly, such that the panels afterwards can be sawn per module.

The panels, if necessary, can be sawn per module, whereby a closed edge next to the sawing cut is obtained. A partition then forms a new edge, such that a separation panel, a part of which has been sawn off, perpendicularly to the longitudinal direction according to a multiple of said module, remains completely closed at the side where a part has been sawn off.

Amongst others, this is important for the hygienic qualities of the separation panel. The standard dimensions thus always can be adapted in a simple manner, whereas the adapted panel keeps its original qualities.

Mostly, the separation panel is installed such that the transverse side walls are directed vertically.

Preferably, an edge of the separation panel has a convex outer side, whereas the edge parallel thereto either has a corresponding hollow outer side, such that two separation panels easily can be placed with their edges against or on top of each other or is flat for placing on the ground.

The spaces between the partitions or between a partition and an edge which is parallel thereto, can be filled with insulating material.

The invention also relates to a method for manufacturing the separation panel described in the foregoing in a simple manner.

The invention consequently relates to a method for manufacturing a separation panel according to any of the preceding claims, which thus comprises two parallel side walls, and between them two pairs of mutually parallel edges and, at the inside, partitions.

According to the invention, this method is characterised in that, with the exception of one edge, the panel is manufactured in one piece by means of injection moulding in an outer mould, whereby the spaces between the edges and a partition and between the partitions are obtained by means of cores in the outer mould, whereby, after it has been removed from the outer mould, the incomplete edge is completed by providing a strip.

This method is very simple and fast and permits to use a relatively low amount of material for a great strength. A simple mould can be used.

The strip for closing-off is manufactured separately, possibly simultaneously, by injection moulding or extrusion.

Preferably, the partitions are formed perpendicularly to the longitudinal edges.

Contrary to boards, which are manufactured by extrusion and are open at both extremities, the partitions are not formed in longitudinal direction, but in transverse direction.

In a preferred embodiment, the longitudinal edge which is provided in the shape of a strip, is snapped on between the side walls.

Snapping is an easy and fast way to fix the strip to the remainder of the panel. This operation can be performed by the user. Snapping also permits an easy removal of the strip.

To this aim, the walls are made somewhat longer than the partitions and, at the side which is open, they protrude beyond the partitions, and, in the protruding part of the walls, at the inside small grooves for the edges of the strip are formed.

For the injection moulding, an outer mould and an inner mould are used, whereby the inner mould consists of cores which are fixed on an oblong base part.

By providing the mould or injection mould per module with movable segments, several standard dimensions in length can be manufactured in function of the methods applied in the intensive livestock husbandry differing per country.

Several of these separation panels can be welded together with their parts, preferably by means of the mirror welding technique, with a welding seam which is tight over its entire length, whereby only the open side situated at the extremity of the unit must be sealed by means of a strip, such that in this manner a new and larger separation panel is formed.

This allows making separation panels in the desired dimension, in order to fulfil specific requirements deviating from the standard dimensions, and such with a minimum of losses.

With the intention of better showing the characteristics of the invention, hereafter, as an example without any limiting character, a preferred form of embodiment of a separation panel for a space for keeping animals and a method for manufacturing such separation panel according to the invention are described, with reference to the accompanying drawings, wherein:
Figure 1 represents a perspective view of a separation panel according to the invention;
Figure 2 represents a cross-section according to line II-II in figure 1;
Figure 3 represents a cross-section according to line III-III in figure 1;
Figure 4, at a larger scale, represents the part indicated by F4 in figure 2;
Figure 5 represents a perspective view with a partial cut-off, of a part of a mould used with the manufacture of the separation panel of the preceding figures;
Figure 6 represents a perspective view of a separation panel similar to that of figure 1, but pertaining to another form of embodiment of the invention;
Figure 7 represents a section according to the line VII-VII in figure 6, on a much larger scale.

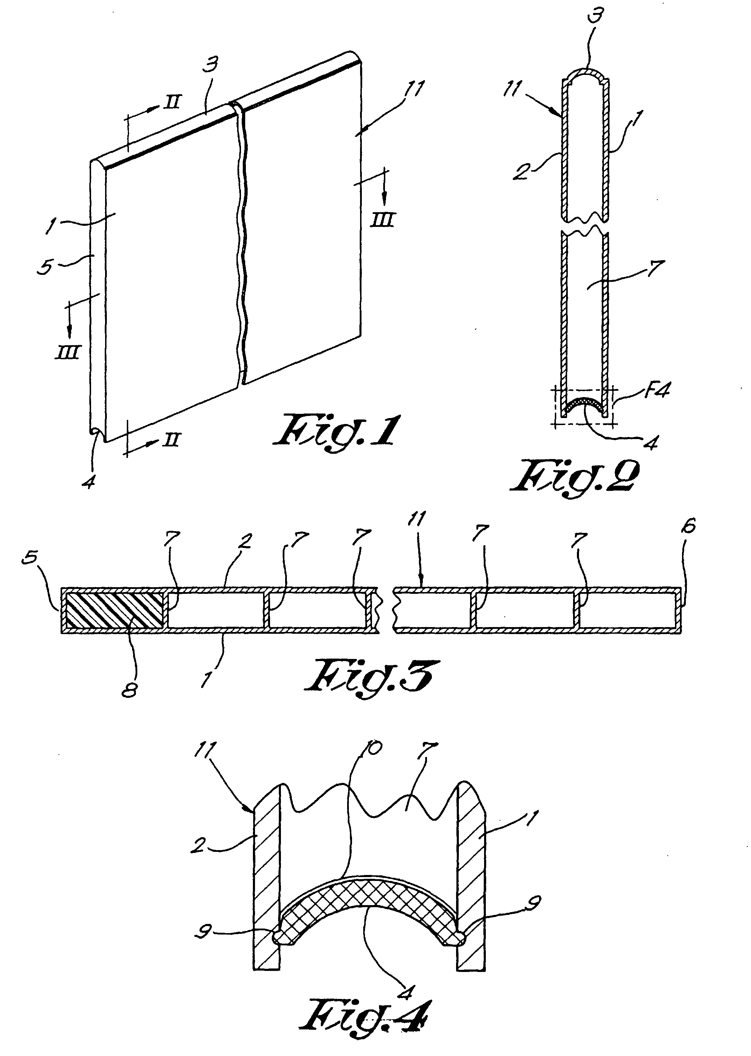

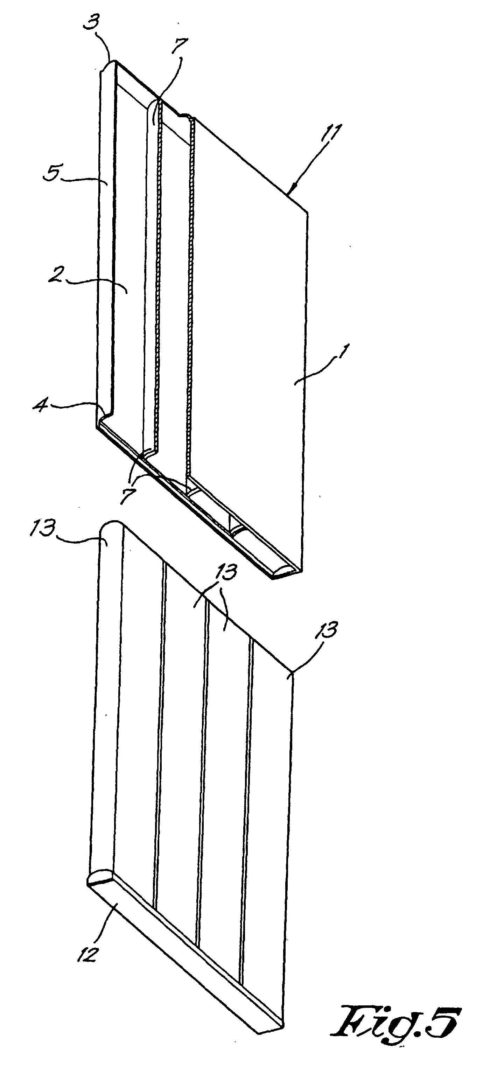

The separation panel for a space for keeping animals represented in figures 1 to 4 is oblong, hollow, closed at all edges and made of synthetic material.

The panel thus consists of two parallel oblong side walls 1 and 2 with between them two longitudinal edges 3 and 4, two transverse edges 5 and 6 and between the two transverse edges 5 and 6, a number of partitions 7 extending parallel thereto and, thus, directed perpendicularly to the longitudinal direction of the separation panel, which partitions mutually connect the oblong side walls 1 and 2.

The partitions 7 are situated at regular distances from each other, such that a modular system is created.

This means that the separation panel can be sawn off crosswise to its longitudinal direction, for example, for forming a door, directly next to a partition 7, such that this partition 7 forms the transverse edge 5 or 6 of the shortened separation panel.

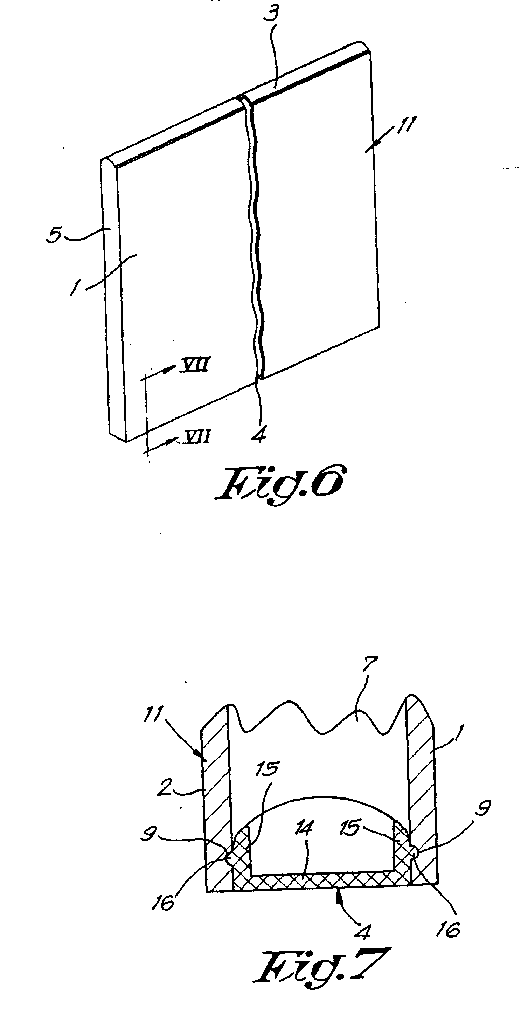

The spaces between the partitions 7 and between the outermost partitions 7 and the transverse edges 5 and 6 can be filled with an insulating material 8. In figure 3, by way of example one of these spaces is represented as filled, however, it is clear that normally either no, or all spaces are filled with insulating material 8.

The longitudinal edge 3 has a convex outer side, whereas the other longitudinal edge 4 has a corresponding hollow outer side.

Normally, the separation panels are placed with their longitudinal direction horizontally, with the convex-bent longitudinal edge 3 at the top, and further the separation panel is described in this position; however, it is clear that they might also be installed with their longitudinal direction, and thus also with the longitudinal edge 3, vertically.

The bottom of the partitions 7 is concave corresponding to the convex upper side of the hollow lowermost edge 4, as can clearly be seen in figure 4.

At the bottom, the side walls 1 and 2 protrude somewhat beyond the lowermost edge 4, and in the parts of the side walls 1 and 2 situated at the outer side of the lowermost edge 4, a groove 9 for the longitudinal lateral edges of the lowermost edge 4 is provided at the inside, over the entire length.

In example shown in figures 1 to 4, the upstanding lateral panel edges 5 and 6 do not protrude beyond the lowermost edge 4. Their lowermost edge is curved and practically corresponds in shape and position to the lower side of the strip forming edge 4.

In a variant, the transverse edges 5 and 6 have the same bottom ends as the partitions 7, whereby then the strip of the lowermost longitudinal edge 4 with both extremities extends continuously up to under these edges 5 and 6.

In both cases the bottom end of the transverse edges 5 and 6 can be directly shaped with the suitable concave lower edge.

Another possibility consists in cutting out the transverse edges 5 and 6 at the bottom with pincers, after manufacturing the panel with the transverse edges 5 and 6 protruding from the lowermost longitudinal edge 4 in the same manner as the side walls 1 and 2. The cutting out is such that the lowermost extremity of these transverse edges 5 and 6 coincides with the underside of the strip.

Whereas the side walls 1 and 2, the uppermost longitudinal edge 3, the lateral edges 5 and 6 and the partitions 7 consist of one piece, the lowermost longitudinal edge 4, however, is a separate strip which thus is snapped with its lateral edges into the grooves 9, such as represented in detail in figure 4.

This snapping-on may be performed by a small elastic deformation of the bottom sides of the side walls 1 and 2, or by elastic deformation of the strip, in which case, in order to allow for this deformation, a small gap 10 remains open between the lowermost longitudinal edge 4 and the partitions 7.

The edges 3 and 4 are complementary, such that two separation panels can be placed one upon the other, whereby the hollow-bent lowermost edge 4 of the uppermost panel connects over the convex-bent uppermost edge 3 of the lowermost panel.

When the transverse edges 5 and 6 are curved at the bottom as described above, the uppermost longitudinal edge 3 then can have the same shape over its entire length.

The separation panel described in the foregoing is manufactured in a simple, fast and inexpensive manner by means of injection moulding as follows, by means of a mould or injection mould, as represented in figure 5.

This mould comprises an outer mould 11, which is open at one extremity, and an inner mould 12, 13 consisting of a basis 12 closing of the open extremity, and cores 13 standing thereupon, by means of which the partitions 7 are formed.

With the exception of the lowermost longitudinal edge 4, the separation panel thus is manufactured in one piece from a thermoplastic synthetic material, preferably from a synthetic material from the group of polyolefines, such as, for example, polyethylene or polypropylene.

The last-mentioned synthetic materials are preferred, as they are particularly well resistant against aggressive chemical products - amongst others originating from cleaning agents and disinfectants - which are present in most barns.

The strip forming the lowermost longitudinal edge 4 is manufactured separately from a thermoplastic synthetic material, for example, from PVC. This strip may be made as well by moulding techniques as by extrusion.

Before placing the lowermost longitudinal edge 4, an insulating material can be brought into the panel through the openings at the underside of the separation panel.

Due to the inner partitions 7, it is possible to saw the separation panel to an element with smaller length and still keep a closed structure.

The transverse edges 5 and 6 must not necessarily have a concave lower end.

In another embodiment of the panel these transverse edges 5 and 6 may have straight lower ends and protrude beyond the lowermost edge 4 in the same manner as the side walls 1 and 2, as shown in figure 6.

In this embodiment, the uppermost longitudinal edge 3 must be formed at its extremities so as to receive the bottom side of the transverse edges 5 and 6.

Further, the strip forming the lowermost edge 4 must not always be a convex-bent strip. Indeed, when the panel is put directly on the ground or a floor, the strip may be have a flat underside as shown in figure 7.

This avoids the accumulation of soil could be accumulated in hollow of the strip.

The flat strip is snapped between the sides 1 and 2 and the same grooves 9 in these sides 1 and 2 are used as for the above-mentioned bent strip. As shown in figure 7, the strip has in fact a U-shaped transverse section and has consequently a flat bottom part 14 and two upstanding legs 15. These legs 14 are provided on the outer side with ribs 16 which by elastic deformation of the legs 14 may be entered in the grooves 9. The lowermost side of the strip is level with the lowermost edges of side walls 1 and 2.

With the above mentioned flat strip, the transverse edges 5 and 6 have preferably a straight bottom end as shown in figure 6. When the traverse edges 5 and 6 have curved bottom ends as shown in figure 1, the hole between the bottom end of each edge 5 and 6 and the flat strip should be closed, for instance by gluing a piece of synthetic material.

By means of the mirror welding technique, the panels can be elongated in longitudinal as well as in transverse directions up to a length desired by the customer, deviating from the standard dimensions which are obtained according to the dimensions of the injection mould.

## Claims

1. Separation panel for a space for keeping animals, which separation panel is an oblong, hollow panel which is closed on all sides and consists of synthetic material, comprises two parallel longitudinal side walls (1,2) and between them two pairs of mutually parallel edges (3,4 and 5,6), and at the inside partitions (7), which are directed parallel to each other and perpendicular to two parallel edges (3,4), wherein one of the edges (4) is a separate strip and the partitions (7) are directed perpendicular in respect to this edge (4), **characterised in that** the separate strip is provided between the side walls (1,2).

2. Separation panel according to claim 1, **characterised in that** the strip is snapped on between the side walls (1,2).

3. Separation panel according to claim 1 or 2, **characterised in that** the strip is an edge (4) directed in longitudinal direction and that the partitions (7) thus are directed perpendicular to the longitudinal direction of the separation panel.

4. Separation panel according to any of the preceding claims, **characterised in that** the inner partitions (7) are provided at regular distances from each other and, therefore, modularly, such that the panels afterwards can be sawn per module.

5. Separation panel according to any of the preceding claims, **characterised in that** an edge (3) comprises a convex outer side, whereas the edge (4) parallel to the edge (3) with the convex outer side, either comprises a corresponding hollow outer side or is flat.

6. Separation panel according to any of the preceding claims, **characterised in that** the side walls (1,2), the edges (3,5,6) and the partitions (7) are made from synthetic material, while the strip forming the remaining edge (4) is also made from thermoplastic synthetic material.

7. Separation panel according to any of the preceding claims, **characterised in that** the spaces between the partitions (7) or between a partition (7) and an edge (5,6) parallel thereto, are filled with insulating material.

8. Method for manufacturing a separation panel according to any of the preceding claims, which thus comprises two parallel side walls (1,2), and between them two pairs of mutually parallel edges (3,4 and 5,6), and at the inside partitions (7), **characterised in that**, with the exception of one edge (4), it is manufactured in one piece by means of injection moulding in an outer mould (11), whereby the spaces between the edges (5,6) and a partition (7) and between the partitions (7) are obtained by means of cores (13) in the outer mould (11), whereby, after it has been removed from the outer mould (11), the incomplete edge (4) is completed by providing a strip between the sidewalls (1,2).

9. Method according to claim 8, **characterised in that** the partitions (7) are formed perpendicular to the longitudinal edges (3,4).

10. Method according to claim 8 or 9, **characterised in that** the longitudinal edge (4) which is provided in the shape of a strip, is snapped on between the side walls (1,2) .

11. Method according to any one of claims 8 to 10, **characterised in that** the side walls (1,2) are made somewhat longer than the partitions (7), such that, at the open side which is to be closed off by the strip, they protrude beyond the partitions (7) and that in the protruding part of the side walls (1,2) at the inside small grooves (9) are formed for the edges of the strip.

12. Method according to any one of claims 8 to 11, **characterised in that** for the injection moulding, an outer mould (11) and an inner mould (12,13) are used, whereby the inner mould (12,13) consists of cores (13) which are fixed to an oblong basis (12).

13. Method according to claims 11 and 12, **characterised in that** an inner mould (12,13) is used, the basis (12) of which is provided with ribs for forming the grooves (9).

14. Method according to any of the claims 8 to 13, **characterised in that** several separation panels are welded to each other at their side walls (1,2), preferably by means of the mirror welding technique, with a welding seam which is tight over its entire length, whereby only the open side situated at the end of the unit is sealed by a strip.

15. Method according to any of the claims 8 to 14, **characterised in that** the separation panel is manufactured of a thermoplastic synthetic material, preferably a synthetic material from the group of polyolefines, such as, for example, polyethylene or polypropylene.

## Patentansprüche

1. Trennwand für einen Tierzuchtraum, welche Wand eine längliche, hohle Wand ist, die an allen Seiten geschlossen ist und aus Synthetikmaterial besteht, zwei parallele längliche Seitenwände (1, 2) umfasst und zwischen diesen zwei Paar zueinander parallele Kanten (3, 4 und 5, 6), und an den inneren Teilern (7), die parallel zueinander und senkrecht zu zwei parallelen Kanten (3, 4) ausgerichtet sind, und in welcher eine der Kanten (4) ein separater Streifen ist und die Teiler senkrecht in Bezug auf diese Kante (4) ausgerichtet sind, **dadurch gekennzeichnet, dass** der separate Streifen zwischen den Seitenwänden (1, 2) bereit gestellt ist.

2. Trennwand nach Anspruch 1, **dadurch gekennzeichnet, dass** der Streifen zwischen den Seitenwänden (1, 2) aufgeschnappt ist.

3. Trennwand nach Anspruch 1 oder 2, **dadurch gekennzeichnet, dass** der Streifen eine in Längsrichtung ausgerichtete Kante (4) ist und dass die Teiler (7) also senkrecht zur Längsrichtung der Trennwand ausgerichtet sind.

4. Trennwand nach einem der vorhergehenden Ansprüche, **dadurch gekennzeichnet, dass** die inneren Teiler (7) in regelmäßigen Abständen voneinander und daher modular bereit gestellt sind, so dass die Wände hinterher pro Modul gesägt werden können.

5. Trennwand nach einem der vorhergehenden Ansprüche, **dadurch gekennzeichnet, dass** eine Kante (3) eine konvexe Außenseite umfasst, während die Kante (4), die parallel zur Kante (3) mit der konvexen Außenseite ist, entweder einen entsprechend hohle Außenseite umfasst oder flach ist.

6. Trennwand nach einem der vorhergehenden Ansprüche, **dadurch gekennzeichnet, dass** die Seitenwände (1, 2), die Kanten (3, 5, 6) und die Teiler (7) aus Synthetikmaterial hergestellt sind, während der Streifen, der die restliche Kante (4) bildet, ebenfalls aus thermoplastischem Synthetikmaterial hergestellt ist.

7. Trennwand nach einem der vorhergehenden Ansprüche, **dadurch gekennzeichnet, dass** die Räume zwischen den Teilern (7) oder zwischen einem Teiler (7) und einer dazu parallelen Kante (5, 6) mit Isoliermaterial gefüllt sind.

8. Verfahren zum Herstellen einer Trennwand gemäß einem der vorhergehenden Ansprüche, die folglich zwei parallele Seitenwände (1,2) und zwischen diesen zwei Paar zueinander parallele Kanten (3, 4 und 5, 6) und an der Innenseite Teiler (7) umfasst, **dadurch gekennzeichnet, dass**, mit Ausnahme einer Kante (4), sie in einem Stück mittels Spritzguss in einer äußeren Gussform (11) hergestellt ist, wobei die Räume zwischen den Kanten (5, 6) und einem Teiler (7) und zwischen den Teilern (7) mittels Kernen (13) in der äußeren Gussform (11) erhalten sind, wobei, nachdem sie aus der äußeren Gussform (11) entfernt worden ist, die unvollständige Kante (4) vervollständigt wird, in dem ein Streifen zwischen den Seitenwänden (1, 2) bereit gestellt wird.

9. Verfahren gemäß Anspruch 8, **dadurch gekennzeichnet, dass** die Teiler (7) senkrecht zu den Längskanten (3, 4) geformt sind.

10. Verfahren nach Anspruch 8 oder 9, **dadurch gekennzeichnet, dass** die Längskante (4), die in der Form eines Streifens bereit gestellt ist, zwischen den Seitenwänden (1, 2) aufgeschnappt ist.

11. Verfahren nach einem der Ansprüche 8 bis 10, **dadurch gekennzeichnet, dass** die Seitenwände (1, 2) etwas länger gemacht sind als die Teiler (7), so dass sie an der offenen Seite, die durch den Streifen abzuschließen ist, über die Teiler (7) hinausragen und dass in dem herausragenden Teil der Seitenwände (1, 2) an der Innenseite kleine Rillen (9) für die Kanten der Streifen geformt sind.

12. Verfahren nach einem der Ansprüche 8 bis 11, **dadurch gekennzeichnet, dass** für den Spritzguss eine äußere Gussform (11) und eine innere Gussform (12, 13) verwendet sind, wobei die innere Gussform (12, 13) aus Kernen (13) besteht, die auf einer länglichen Basis (12) befestigt sind.

13. Verfahren nach Anspruch 11 und 12, **dadurch gekennzeichnet, dass** eine innere Gussform (12, 13) verwendet ist, deren Basis (12) mit Rippen zum Bilden der Rillen (9) versehen ist.

14. Verfahren nach einem der Ansprüche 8 bis 13, **dadurch gekennzeichnet, dass** mehrere Trennwände an ihren Seitenwänden (1, 2) aneinander geschweißt sind, vorzugsweise mittels des Spiegelschweißverfahrens, mit einer Schweißnaht, die dicht über ihre gesamte Länge ist, wobei nur die offene Seite, die sich am Ende der Einheit befindet, durch einen Streifen abgedichtet ist.

15. Verfahren nach einem der Ansprüche 8 bis 14, **dadurch gekennzeichnet, dass** die Trennwand aus einem thermoplastischen Synthetikmaterial hergestellt ist, vorzugsweise einem Synthetikmaterial aus der Gruppe von Polyolefinen, wie zum Beispiel Polyethylen oder Polypropylen.

## Revendications

1. Panneau de séparation pour un espace destiné à garder des animaux, ledit panneau de séparation étant un panneau creux oblong qui est fermé de tout côté qui est constitué d'une matière synthétique, comprenant deux parois latérales longitudinales parallèles (1, 2) et, entre ces dernières, deux paires de bords réciproquement parallèles (3, 4 et 5, 6), et à l'intérieur, des parois de séparation (7) qui sont orientées parallèlement l'une à l'autre et perpendiculairement aux deux bords parallèles (3, 4), un des bords (4) étant une bande séparée et les parois de séparation (7) étant orientées perpendiculairement par rapport à ce bord (4), **caractérisé en ce que** la bande séparée est prévue entre les parois latérales (1, 2).

2. Panneau de séparation selon la revendication 1, **caractérisé en ce que** la bande vient s'encliqueter entre les parois latérales (1, 2).

3. Panneau de séparation selon la revendication 1 ou 2, **caractérisé en ce que** la bande est un bord (4) orienté en direction longitudinale et **en ce que** les parois de séparation (7) sont ainsi orientées perpendiculairement à la direction longitudinale du panneau de séparation.

4. Panneau de séparation selon l'une quelconque des revendications précédentes, **caractérisé en ce que** les parois de séparation internes (7) sont prévues à des distances régulières l'une de l'autre et en conséquence, de façon modulaire, de telle sorte que les panneaux par la suite peuvent être sciés par module.

5. Panneau de séparation selon l'une quelconque des revendications précédentes, **caractérisé en ce qu'**un bord (3) comprend un côté externe convexe, tandis que le bord (4) parallèle au bord (3) muni du côté externe convexe, soit comprend un côté externe (2) correspondant, soit est plat.

6. Panneau de séparation selon l'une quelconque des revendications précédentes, **caractérisé en ce que** les parois latérales (1, 2), les bords (3, 5, 6) et les parois de séparation (7) sont réalisées en une matière synthétique, tandis que la bande formant le bord restant (4) est également réalisée à partir d'une matière synthétique thermoplastique.

7. Panneau de séparation selon l'une quelconque des revendications précédentes, **caractérisé en ce que** les espaces ménagés entre les parois de séparation (7) ou bien entre une paroi de séparation (7) et un bord (5, 6) parallèle aux premières citées, sont remplis avec une matière isolante.

8. Procédé de fabrication d'un panneau de séparation selon l'une quelconque des revendications précédentes, qui comprend par conséquent, deux parois latérales longitudinales parallèles (1, 2) et, entre ces dernières, deux paires de bords réciproquement parallèles (3, 4 et 5, 6), et à l'intérieur, des parois de séparation (7), **caractérisé en ce que**, à l'exception d'un bord (4), on le fabrique en une seule pièce par moulage par injection dans un moule externe (11), les espaces ménagés entre les bords (5, 6) et une paroi de séparation (7) et entre les parois de séparation (7) sont obtenus à l'aide de parties centrales (13) dans le moule externe (11), par lequel, après l'avoir retiré du moule externe (11), le bord incomplet (4) est achevé en procurant une bande entre les parois latérales (1, 2).

9. Procédé selon la revendication 8, **caractérisé en ce que** les parois de séparation (7) sont formées perpendiculairement aux bords longitudinaux (3, 4).

10. Procédé selon la revendication 8 ou 9, **caractérisé en ce que** le bord longitudinal (4) qui est prévu sous la forme d'une bande, vient s'encliqueter entre les parois latérales (1, 2).

11. Procédé selon l'une quelconque des revendications 8 à 10, **caractérisé en ce que** les parois latérales (1, 2) sont réalisées pour être légèrement plus longues que les parois de séparation (7), de telle sorte qu'à leur côté ouvert, qui doit être obturé par la bande, elles font saillie au-delà des parois de séparation (7), et **en ce que**, dans la partie saillante des parois latérales (1, 2), on forme, à l'intérieur, de petites rainures (9) pour les bords de la bande.

12. Procédé selon l'une quelconque des revendications 8 à 11, **caractérisé en ce que**, pour le moulage par injection, on utilise un moule externe (11) et un moule interne (12, 13), le moule interne (12, 13) étant constitués de parties centrales (13) qui sont fixées à une base oblongue (12).

13. Procédé selon l'une quelconque des revendications 8 à 12, **caractérisé en ce qu'**on utilise un moule interne (12, 13) dont la base est munie de nervures pour former les rainures (9).

14. Procédé selon l'une quelconque des revendications 8 à 13, **caractérisé en ce qu'**on soude plusieurs panneaux de séparation les uns aux autres à leurs parois latérales (1, 2), de préférence à l'aide de la technique de soudage spéculaire, avec un cordon de soudure qui est serré sur toute sa longueur, seul le côté ouvert situé à l'extrémité de l'unité étant rendu étanche à l'aide d'une bande.

15. Procédé selon l'une quelconque des revendications 8 à 14, **caractérisé en ce que** le panneau de séparation est fabriqué en une matière synthétique thermoplastique, de préférence une matière synthétique choisie parmi le groupe des polyoléfines telles que par exemple le polyéthylène ou le polypropylène.
